# EUROPEAN PATENT APPLICATION

(11) **EP 4 521 694 A2**
(43) Date of publication of application: **12.03.2025**
(21) Application number: 24221780.0
(22) Date of filing: 19.12.2024
(51) Int. Cl.: H04L 41/00

(54) **METHOD AND APPARATUS FOR ACCESSING NETWORK FUNCTION VIRTUALIZATION CONTROLLER BY NETWORK ELEMENT**

(30) Priority: 02.02.2024 CN 202410155328
(71) Applicant: Beijing Baidu Netcom Science Technology Co., Ltd., Beijing 100085 (CN)
(72) Inventor: PENG, Tao, Beijing, 100085 (CN); ZHANG, Meng, Beijing, 100085 (CN); ZHANG, Fenghui, Beijing, 100085 (CN)
(74) Representative: V.O.

(57) **Abstract**

The disclosure provides a method and apparatus for accessing a network function virtualization controller by a network element, which relates to the field of cloud computing technology, specifically to the field of cloud service technology. An implementation of the method includes: creating at least one service unit in a region to which a network element belongs; associating the at least one service unit with a system VPC corresponding to the network element; associating at least one availability zone comprised in the service unit with at least one device pool and at least one subnet respectively, where the device pool is formed by aggregating at least one virtual network element device; associating the at least one device pool with the at least one subnet based on an IP corresponding; and accessing, by the at least one service unit, a network function virtualization controller deployed in the region to which the network element belongs. The implementation proposes a construction model that supports multi network element access to NFV platforms through a set of abstractions of cloud resources.

## Description

### TECHNICAL FIELD

The present disclosure relates to the field of cloud computing technology, and specifically to the field of cloud service technology.

### BACKGROUND

NFV (Network Function Virtualization) is a network design architecture model that abstracts existing physical network element devices into virtual resources through virtualization technology, enabling the functionality of network nodes. This approach simplifies the maintenance of network devices, reduces costs, and enhances the scalability of network elements.

In NFV controllers, due to significant differences in virtual device construction, configuration provisioning, data flow forwarding, statistics and alarm data collection and reporting among different types of network elements, it is challenging to support multiple types of network elements within a single NFV controller.

Currently, the common approach of supporting multiple types of network elements is to provide a separate set of NFV controllers for each type. In this approach, except for the consistent external API (Application Programming Interface) of the NFV controller's basic framework, the internal implementation logic differs significantly, and each network element's NFV controller is deployed and upgraded independently.

### SUMMARY

A method and apparatus for accessing a network function virtualization controller by a network element, a storage medium and a program product are provided according to embodiments of the disclosure.

In a first aspect, a method for accessing a network function virtualization controller by a network element is provided according to embodiments of the disclosure, which includes: creating at least one service unit in a region to which a network element belongs; associating the at least one service unit with a system virtual private cloud (VPC) corresponding to the network element; associating at least one availability zone comprised in the service unit with at least one device pool and at least one subnet respectively, wherein the device pool is formed by aggregating at least one virtual network element device; associating the at least one device pool with the at least one subnet based on an IP corresponding relationship; and accessing, by the at least one service unit, a network function virtualization controller deployed in the region to which the network element belongs.

In a second aspect, an apparatus for accessing a network function virtualization controller by a network element is provided according to embodiments of the disclosure, including: a creating module configured to create at least one service unit in a region to which a network element belongs; a first associating module configured to associate the at least one service unit with a system virtual private cloud (VPC) corresponding to the network element; a second associating module configured to associate at least one availability zone comprised in the service unit with at least one device pool and at least one subnet respectively, wherein the device pool is formed by aggregating at least one virtual network element device; a third associating module configured to associate the at least one device pool with the at least one subnet based on an IP corresponding relationship; and an accessing module configured to access, by the at least one service unit, a network function virtualization controller deployed in the region to which the network element belongs.

In a third aspect, non-transitory computer readable storage medium storing instructions is provided according to embodiments of the disclosure, where the instructions are used to cause a computer to execute the method according to the first aspect.

In a fourth aspect, a computer program product including a computer program according to embodiments of the disclosure is provided, which, when executed by a processor performs the method according to the first aspect

Embodiments of the present disclosure provide an implementation manner of a NFV controller that supports multiple network element access, and provide a capability of differential network function virtualization for various network elements. A construction model of supporting multielement access to NFV platform is proposed through a group of abstractions of cloud resources. Compared with an implementation method of providing a set of independent NFV controllers for different network elements, only one NFV controller needs to be maintained, thereby reducing device cost and operation and maintenance cost.

It should be understood that the content described in this section is not intended to identify key or important features of the embodiments disclosed herein, nor is it intended to limit the scope of the disclosure. The other features disclosed herein will be easily understood through the following description.

### BRIEF DESCRIPTION OF THE DRAWINGS

Through detailed descriptions of non-limiting embodiments given with reference to the following accompanying drawings, other features, objectives and advantages of the present disclosure will be more apparent. The accompanying drawings are used for a better understanding of the scheme, and do not constitute a limitation to the present disclosure. Here:
Fig. 1 a diagram of an NFV architecture;
Fig. 2 is a flowchart of an embodiment of a method for accessing a network function virtualization controller by a network element according to the present disclosure;
Fig. 3 is a flowchart of another embodiment of the method for accessing a network function virtualization controller by a network element according to the present disclosure;
Fig. 4 is a diagram of a logical relationship between service objects;
Fig. 5 is a schematic diagram of a task flow;
Fig. 6 is a schematic diagram of an access of a network element user to a service unit instance;
Fig. 7 is a schematic structural diagram of an embodiment of an apparatus for accessing a network function virtualization controller by a network element according to the present disclosure; and
Fig. 8 is a block diagram of an electronic device used to implement the method for accessing a network function virtualization controller by a network element according to embodiments of the present disclosure.

### DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description.

It should be noted that the embodiments in the present disclosure and the features in the embodiments may be combined with each other on a non-conflict basis. The present disclosure will be described below in detail with reference to the accompanying drawings and in combination with the embodiments.

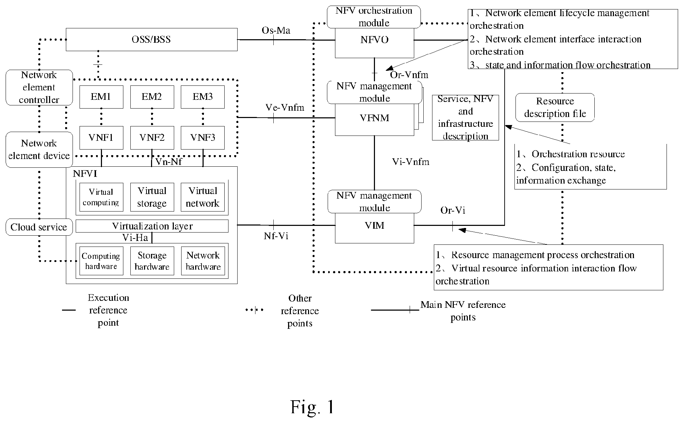

Fig. 1 is a diagram of an NFV architecture. As shown in Fig. 1, the NFV architecture mainly includes the following modules and components:
1. VIM (Virtualized Infrastructure Manager(s)) + NFVI (NFV Infrastructure) which may be understood as IAAS (Infrastructure as a Service), such as virtual computing, virtual storage and a virtual network; herein, the VIM is responsible for controlling and managing the computing resources, storage resources and network resources of the NFVI, such as starting, stopping, initializing, and upgrading hardware and virtual machines. The NFVI is the basis for carrying a VNF (virtual network function, virtual network element). The core of the NFVI is to use a standardized virtualization technology to build a unified shared resource pool based on general-purpose hardware to support many tenants, thereby providing resource support for different types of VNFs on demand. The NFVI contains a virtualization layer and physical resources (e.g., computing hardware, storage hardware, and network hardware). The NFVI may be deployed across several physical locations. In this case, the network providing a data connection for these physical sites is also referred to as a part of the NFVI.
2. VNF is a virtualization instance of a traditional network device such as a router, a firewall and a load balancer.
3. EM (Element Management, Network Element Management Module) is used to manage a corresponding VNF (virtual network function).
4. VNFM (VNF Manager, VNF Management Plane) is responsible for the lifecycle management, instantiation, instance upgrading, etc. of VNF instances.
5. NFVO (NFV Orchestrator) is responsible for a service orchestration and a resource orchestration. Here, the resource orchestration may include, but not limited to, water level management, cluster management, grouping management, resource management, and the like. The service orchestration may include, but not limited to, management of service types, a construction of a forward graph, an interaction with the EM, and the like. The resource description includes a VNF deployment template, a VNF forwarding graph, service-related information, and information of an NFV infrastructure information model.

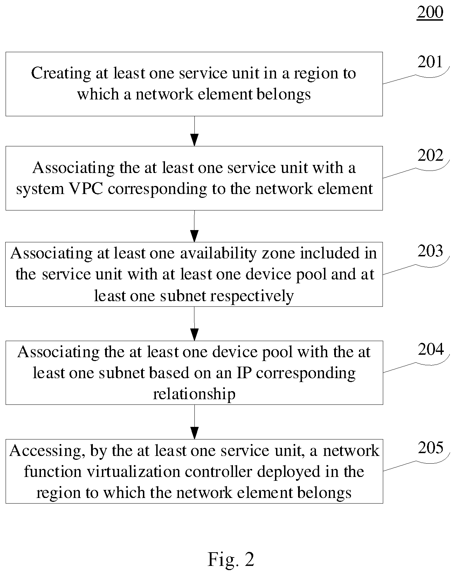

Further referring to Fig. 2, Fig. 2 illustrates a flow 200 of an embodiment of a method for accessing a network function virtualization controller by a network element according to the present disclosure. The method for accessing a network function virtualization controller by a network element includes the following steps:

Step 201, creating at least one service unit in a region to which a network element belongs.

In this embodiment, the at least one service unit is created in the region to which the network element belongs.

Here, the NFV controller is deployed at a granularity of regions, and the network element accesses the NFV controller at a granularity of service units in each region. For one network element, at least one service unit may be created in a given region, and the resources in the at least one service unit are isolated from each other.

Region is a concept in cloud computing, regions referring to geographical areas divided by a cloud service provider on a global scale. Each region typically consists of a plurality of data centers. The plurality of data centers are distributed at different geographical locations, and may provide cloud computing services.

An NFV service unit (SU) refers to that the NFV controller providing services for a virtual network element at the granularity of service units. The service unit stores the definition of the service type of the network element. Resources, environments and devices in different service units are completely isolated from each other. For one network element account, at least one service unit may be created in the NFV controller. An operation is performed on an internal NFV service through a specified service unit. One service unit can only belong to one user, and can only be associated with one system VPC (virtual private cloud).

Step 202, associating the at least one service unit with a system VPC corresponding to the network element.

In this embodiment, the at least one service unit is associated with the system VPC corresponding to the network element.

Here, one service unit can only be associated with one system VPC. One system VPC may be associated with at least one service unit, such that different service units may run in a given system VPC.

VPC is a customizable virtual network that enables users to build their own network environments by specifying configurations such as IP address ranges and subnets. Networks between different VPCs are isolated, allowing users to create and manage cloud resource instances such as virtual machines within their VPCs.

An NFV system VPC refers to a VPC environment where an NFV network element is. In the current NFV system, the NFV system VPC is managed and created by the NFV system. An NFV system VPC may be associated with at least one NFV service unit. The system VPC is created by an NFV system cloud account and is a subordinate resource of the cloud account.

The NFV system cloud account is an account used by the NFV system to access resources on the cloud. The account is generally granted permissions for cloud resource invocation by the network element service provider and configured for use in the NFV management system. An NFV management system is associated with multiple system cloud accounts.

Step 203, associating at least one availability zone included in the service unit with at least one device pool and at least one subnet respectively.

In this embodiment, at least one availability zone included in the service unit is associated with at least one device pool and at least one subnet, respectively.

Here, an service unit may include at least one availability zone. Each availability zone may be associated with at least one device pool and at least one subnet. A given device pool may be associated with at least one subnet, and a given subnet may be associated with at least one device pool. The device pool is formed by aggregating at least one virtual network element device, and is responsible for the management of the entire lifecycle of an internal virtual network element device. The virtual network element device consists of service entities hosted on at least one of virtual machines, container objects, and elastic bare metal servers, providing consistent data forwarding capabilities externally. Also, there may be one or more virtual machines, container objects and elastic bare metal servers.

The availability zone (AZ) refers to a physical data center having independent power and a network system within a given region.

The subnet is a user-definable range of IP addresses within the VPC. According to service requirements, different address spaces and IP segments can be specified by CIDR (Classless Inter Domain Routing). Subnets have an availability zone attribute, and there is a one-to-one relationship between subnets and availability zones.

An NFV device pool is a virtual network element container having an availability zone attribute in the service unit. The capacity expansion and reduction of the NFV device is completed in the device pool. A plurality of device pools with the same availability zone attribute may be created under a single service unit. A device pool may be associated with at least one subnet, including a primary subnet and a secondary subnet.

The virtual network element device is a basic unit through which the NFV network element provides a service externally. A virtual network element device is composed of at least one of the virtual machine, the container object and the elastic bare metal server, and there may be one or more virtual machines, container objects and elastic bare metal servers. A plurality of virtual network element devices work together to complete functions such as transmission, forwarding and routing of network data. There is a one-to-many relationship between the device pool and the virtual network element devices. That is, a device pool includes at least one virtual network element device, but a virtual network element device belongs to only one device pool.

Step 204, associating the at least one device pool with the at least one subnet based on an IP corresponding relationship .

In this embodiment, the at least one device pool is associated with the at least one subnet based on the IP corresponding relationship.

Here, a given device pool may be associated with at least one subnet, and a given subnet may be associated with at least one device pool.

Step 205, accessing, by the at least one service unit, a network function virtualization controller deployed in the region to which the network element belongs.

In this embodiment, the at least one service unit accesses the network function virtualization controller deployed in the region to which the network element belongs.

The embodiment of the present disclosure provides an implementation of an NFV controller supporting the access of a plurality of network elements, and provides a differentiated network function virtualization capability for various types of network elements. A construction model supporting the access of the plurality of network elements to the NFV platform is proposed through a set of abstractions for cloud resources. Compared to the implementation of providing a separate NFV controller for each different network element, the method only requires the maintenance of a single NFV controller, thereby reducing equipment costs and operational and maintenance expenses.

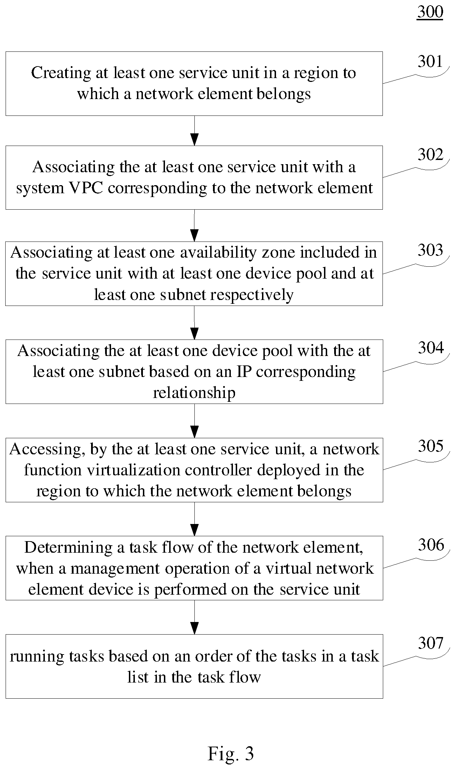

Further referring to Fig. 3, Fig. 3 illustrates a flow 300 of another embodiment of the method for accessing a network function virtualization controller by a network element according to the present disclosure. The method for accessing a network function virtualization controller by a network element includes the following steps:
Step 301, creating at least one service unit in a region to which a network element belongs.
Step 302, associating the at least one service unit with a system virtual private cloud (VPC) corresponding to the network element.
Step 303, associating at least one availability zone included in the service unit with at least one device pool and at least one subnet respectively.

Here, the device pool is formed by aggregating at least one virtual network element device, and a virtual network element device is composed of at least one virtual machine and/or a container object.

Step 304, associating the at least one device pool with the at least one subnet based on an IP corresponding relationship.

Step 305, accessing, by the at least one service unit, a network function virtualization controller deployed in the region to which the network element belongs.

In this embodiment, the specific operations of steps 301-305 are already described in detail in steps 201-205 in the embodiment shown in Fig. 2, and thus, the details will not be repeatedly described here.

Step 306, determining a task flow of the network element, when a management operation of the virtual network element device is performed on the service unit.

In this embodiment, when the management operation of the virtual network element device is performed on the service unit, the task flow of the network element is determined.

Here, NFV controller APIs may be divided into network element lifecycle management APIs and APIs for managing resources such as a service object device pool and a virtual network element device. The network element lifecycle management APIs may be used for management operations of the entire lifecycle of the virtual network element device in the device pool, such as creation, lower-level configuration, activation, deactivation, stopping and changing a configuration, release, hot upgrade, image upgrade, and restart .

Here, each operation flow in the lifecycle of the NFV network element may be defined by a task flow. The task flow can run sequentially according to the execution order of the tasks in a task list. Each task corresponds to one function method in the NFV controller, and all tasks have a given method definition, and share a set of context data as input-parameter information for their respective tasks. A task in the task list is a referenceable method entity existing independently of the task flow. In two different task flows, the entity may be referenced by the task flows in different ways. The service logic redundancy problem when the NFV is accessed by different task flows and network elements is solved through the reference association between the task and the task flow.

When different network elements access the NFV controller, there may be identical task flows, with only differences in input parameter data. In the NFV controller, identical or similar task flows are abstracted as service types. A service unit is associated with a service type, and all management operations for the virtual network elements in the service unit invoke the task flow under this service type for execution. Furthermore, service types have inheritance capabilities. When a management operation of the virtual network element is performed on a service unit, the task flow of a specific service type is found first. If not available, the task flow is searched for in the inherited service type.

The NFV task flow component is a set of self-developed embedded task flow components. Each change in the lifecycle of an NFV device determines a task flow. A task flow generally consists of multiple tasks. The essence of a task flow is a predefined code execution process. If task flows are not used, the execution process can also be implemented through fixed code.

For an NFV network element lifecycle, a virtual network element device performs state transition in a mode of a standard state machine in the device pool, and there are nine management operations: creation, lower-level configuration, activation, deactivation, stopping and changing a configuration, release, hot upgrade, image upgrade, and restart. Driven by management operations, virtual network elements transition from one state to another in the standard state machine. The entire process from the creation to the destruction of a virtual network element is defined as the lifecycle of an NFV network element. All network element systems accessing the NFV operate within this unified lifecycle.

Step 307, running tasks based on an order of tasks in a task list in the task flow.

In this embodiment, the tasks are run based on the order of the tasks in the task list in the task flow.

The embodiment of the present disclosure provides an implementation of an NFV controller supporting the access of a plurality of network elements, and provides a differentiated network function virtualization capability for various types of network elements. A construction model supporting the access of the plurality of network elements to the NFV platform is proposed through a set of abstractions on cloud resources. The service logic redundancy problem of the NFV system due to the access of different network elements is solved through a reusable task module. The logic redundancy problem due to the access of the network elements having similar lifecycle logic is solved through a service type.

Compared with an implementation in which a set of independent NFV controllers is respectively provided for different network elements, only one NFV controller needs to be maintained, thereby reducing the manufacturing cost and operation and maintenance cost of the device. Meanwhile, in the services of the NFV network element, a lot of common reusable service logic can be reused, thereby reducing the time and complexity cost of the access of the network element.

Compared with an implementation in which a set of independent service processing logic is provided for different network elements, there is no need to perform logic development with pertinence during the access of a new network element, and the service logic of different network elements is reusable, thereby reducing the access cost of a single network element. The services of different network elements are independent, thereby reducing the complexity of the system. Moreover, the service code of the single network element does not cause the failure of all network element control systems.

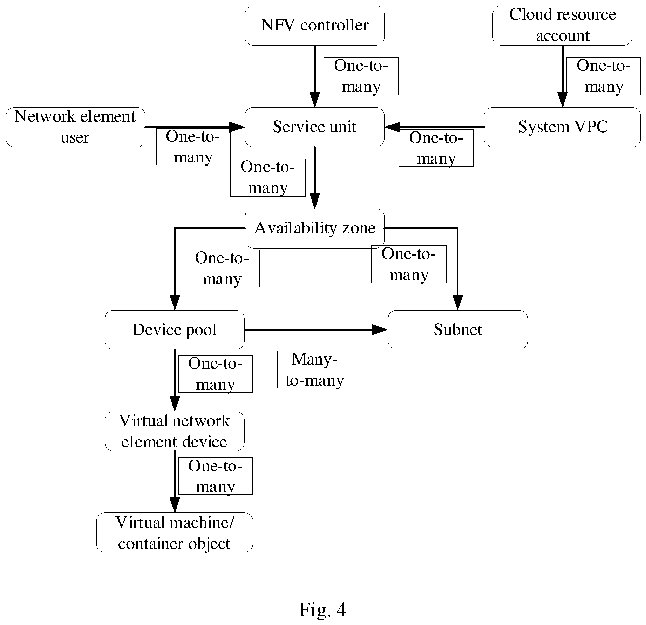

Fig. 4 is a logical relationship diagram between service objects. As shown in Fig. 4, an NFV controller is deployed at a granularity of regions, and a network element accesses the NFV controller at a granularity of service units in each region. For one network element, a plurality of service units may be created in a given region, and resources are isolated between the plurality of service units. One service unit can only be associated with one system VPC. One system VPC may be associated with a plurality of service units, such that different service units may operate in a given system VPC. One service unit may include a plurality of availability zones, each of which may be associated with a plurality of device pools and subnets. One device pool may be associated with a plurality of subnets, and a given subnet may also be associated with a plurality of device pools. The device pool is an aggregation of virtual network element device objects, and is responsible for the management of the entire lifecycle of an internal virtual network element device. One virtual network element device is composed of service entities carried by one or more virtual machines or container objects, to provide consistent data forwarding capabilities to the outside.

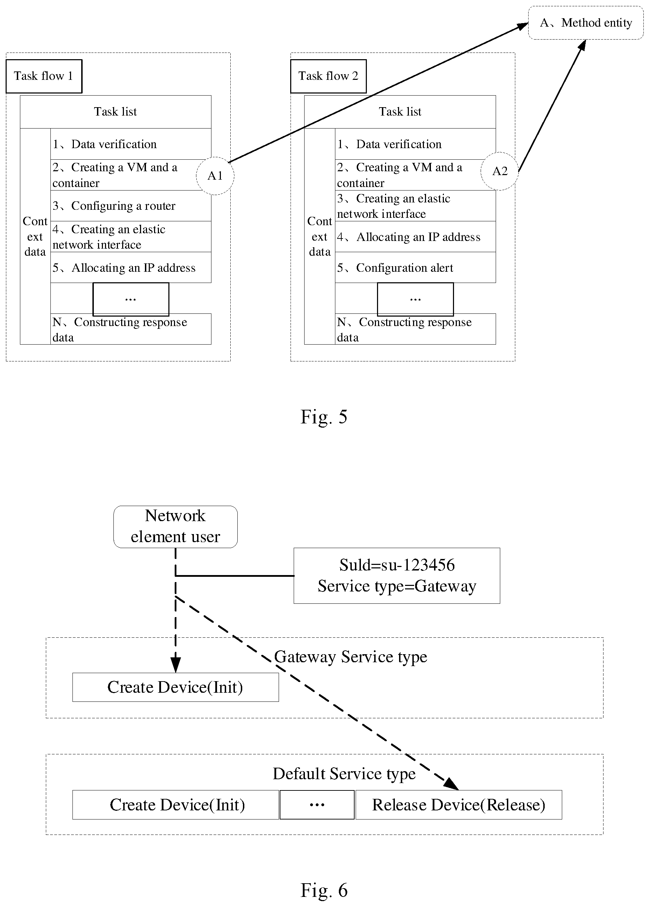

Fig. 5 is a schematic diagram of a task flow. As shown in Fig. 5, the task list in the task flow 1 includes tasks such as data verification, creating a VM and a container, configuring a router, creating an elastic network interface, allocating an IP address, and constructing response data. The task list in the task flow 2 includes tasks such as data verification, creating a VM and a container, creating an elastic network interface, allocating an IP address, configuring alerts, and constructing response data. A task is a referenceable method entity existing independently of a task flow. In two different task flows, the entity may be referenced by the task flows in different ways. For example, A1 in the task flow 1 and A2 in the task flow 2 are both references from an entity method (A method entity), and A1 and A2 are identical. The service logic redundancy problem when the NFV is accessed by different task flows and network elements is solved through the reference association between the task and the task flow.

Fig. 6 is a schematic diagram of an access of a network element user to a service unit instance. As shown in Fig. 6, the service type "Gateway" is inherited from the service type "Defalut", the network element user accesses a service unit instance with the ID "su-123456", and the service type of this instance is "Gateway". When the [Create Device] API is invoked, the system will find the task flow [Create Device (Init)] defined in the "Gateway" type according to the service type in the service unit, and execute the task flow. When the [Release Device] operation is invoked, the system calls the task flow in the lower-layer service type "Defalut" for execution, since the related task flow is not defined in the service type Gateway.

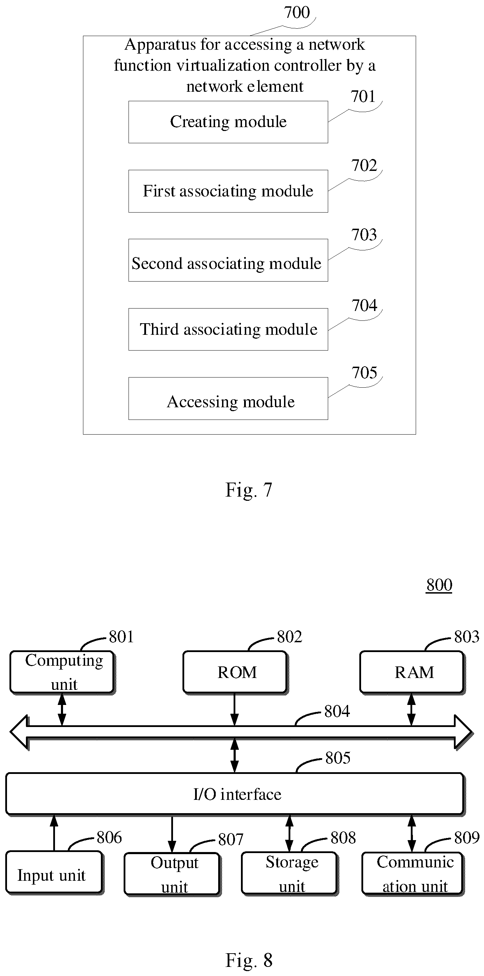

Further referring to Fig. 7, as an implementation of the method shown in the above drawings, the present disclosure provides an embodiment of an apparatus for accessing a network function virtualization controller by a network element. The embodiment of the apparatus corresponds to the embodiment of the method shown in Fig. 2, and the apparatus may be applied in various electronic devices.

As shown in Fig. 7, an apparatus 700 for accessing a network function virtualization controller by a network element in this embodiment may include: a creating module 701, a first associating module 702, a second associating module 703, a third associating module 704 and an accessing module 705. Here, the creating module 701 is configured to create at least one service unit in a region to which a network element belongs. The first associating module 702 is configured to associate the at least one service unit with a system VPC corresponding to the network element. The second associating module 703 is configured to associate at least one availability zone included in the service unit with at least one device pool and at least one subnet respectively. Here, the device pool is formed by aggregating at least one virtual network element device. The third associating module 704 is configured to associate the at least one device pool with the at least one subnet based on an IP corresponding relationship. The accessing module 705 is configured to access, by the at least one service unit, a network function virtualization controller deployed in the region to which the network element belongs.

In this embodiment, for specific processes of the creating module 701, the first associating module 702, the second associating module 703, the third associating module 704 and the accessing module 705 in the apparatus 700 for accessing a network function virtualization controller by a network element, and their technical effects, reference may be respectively made to the related description of steps 201-205 in the corresponding embodiment of Fig. 2, and thus the specific processes and the technical effects will not be repeatedly described here.

In some alternative implementations of this embodiment, the apparatus 700 for accessing a network function virtualization controller by a network element further includes: a determining module, configured to determine a task flow of the network element, when a management operation of the virtual network element device is performed on the service unit; and a running module, configured to run tasks based on an order of the tasks in a task list in the task flow.

In some alternative implementations of this embodiment, the determining module is further configured to: call, in response to finding a service type associated with the service unit from the network function virtualization controller, a task flow under the service type associated with the service unit.

In some alternative implementations of this embodiment, the determining module is further configured to: call, in response to not finding the service type associated with the service unit from the network function virtualization controller, a task flow under a service type inherited by the service unit.

In some alternative implementations of this embodiment, a task is a referenceable method entity existing independently of the task flow, and a given referenceable method entity is capable of being referenced by different task flows in different ways.

In the technical solution of the present disclosure, the acquisition, storage, use, etc. of the personal information of a user all comply with the provisions of the relevant laws and regulations, and do not violate public order and good customs.

According to embodiments of the present disclosure, the present disclosure further provides an electronic device, a readable storage medium and a computer program product.

FIG. 8 illustrates a schematic block diagram of an example electronic device 800 that may be used to implement embodiments of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present disclosure described and/or claimed herein.

As shown in FIG. 8, the device 800 includes a computation unit 801, which may perform various appropriate actions and processing, based on a computer program stored in a read-only memory (ROM) 802 or a computer program loaded from a storage unit 808 into a random access memory (RAM) 803. In the RAM 803, various programs and data required for the operation of the device 800 may also be stored. The computation unit 801, the ROM 802, and the RAM 803 are connected to each other through a bus 804. An input/output (I/O) interface 805 is also connected to the bus 804.

Multiple components in the device 800 are connected to the I/O interface 805, including: an input unit 806, for example, a keyboard and a mouse; an output unit 807, for example, various types of displays and speakers; the storage unit 808, for example, a disk and an optical disk; and a communication unit 809, for example, a network card, a modem, or a wireless communication transceiver. The communication unit 809 allows the device 800 to exchange information/data with other devices over a computer network such as the Internet and/or various telecommunication networks.

The computation unit 801 may be various general-purpose and/or dedicated processing components having processing and computing capabilities. Some examples of the computation unit 801 include, but are not limited to, central processing unit (CPU), graphics processing unit (GPU), various dedicated artificial intelligence (AI) computing chips, various computing units running machine learning model algorithms, digital signal processors (DSP), and any appropriate processors, controllers, microcontrollers, etc. The computation unit 801 performs the various methods and processes described above, such as a method for accessing a network function virtualization controller by a network element. For example, in some embodiments, the method for accessing a network function virtualization controller by a network element may be implemented as a computer software program, which is tangibly included in a machine readable medium, such as the storage unit 808. In some embodiments, part or all of the computer program may be loaded and/or installed on the device 800 via the ROM 802 and/or the communication unit 809. When the computer program is loaded into the RAM 803 and executed by the computation unit 801, one or more steps of the method for accessing a network function virtualization controller by a network element described above may be performed. Alternatively, in other embodiments, the computation unit 801 may be configured to perform the method for accessing a network function virtualization controller by a network element by any other appropriate means (for example, by means of firmware).

Various embodiments of the systems and technologies described above can be implemented in digital electronic circuit system, integrated circuit system, field programmable gate array (FPGA), application specific integrated circuit (ASIC), application special standard product (ASSP), system on chip (SOC), complex programmable logic device (CPLD), computer hardware, firmware, software, and/or combinations thereof. These various embodiments may include being implemented in one or more computer programs that may be executed and/or interpreted on a programmable system including at least one programmable processor, which may be a dedicated or general programmable processor that may receive data and instructions from a storage system, at least one input device, and at least one output device, and transmit data and instructions to the storage system, the at least one input device, and the at least one output device.

Program codes for implementing the method of the present disclosure may be written in any combination of one or more programming languages. These program codes may be provided to a processor or controller of a general purpose computer, special purpose computer or other programmable apparatus for data processing such that the program codes, when executed by the processor or controller, enables the functions/operations specified in the flowcharts and/or block diagrams being implemented. The program codes may execute entirely on the machine, partly on the machine, as a stand-alone software package partly on the machine and partly on the remote machine, or entirely on the remote machine or server.

In the context of the present disclosure, the machine readable medium may be a tangible medium that may contain or store programs for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, portable computer disk, hard disk, random access memory (RAM), read only memory (ROM), erasable programmable read only memory (EPROM or flash memory), optical fiber, portable compact disk read only memory (CD-ROM), optical storage device, magnetic storage device, or any suitable combination of the foregoing.

In order to provide interaction with the user, the systems and techniques described herein may be implemented on a computer having: a display device for displaying information to the user (e.g., a CRT (cathode ray tube) or LCD (liquid crystal display) monitor); a keyboard and a pointing device (e.g., mouse or trackball), through which the user can provide input to the computer. Other kinds of devices can also be used to provide interaction with users. For example, the feedback provided to the user may be any form of sensory feedback (e.g., visual feedback, auditory feedback, or tactile feedback); and the input from the user can be received in any form (including acoustic input, voice input or tactile input).

The systems and technologies described herein may be implemented in a computing system that includes a back-end component (e.g., as a data server), or a computing system that includes a middleware component (e.g., an application server), or a computing system that includes a front-end component (e.g., a user computer with a graphical user interface or a web browser through which the user can interact with an implementation of the systems and technologies described herein), or a computing system that includes any combination of such a back-end component, such a middleware component, or such a front-end component. The components of the system may be interconnected by digital data communication (e.g., a communication network) in any form or medium. Examples of the communication network include: a local area network (LAN), a wide area network (WAN), and the Internet.

The computer system may include a client and a server. The client and the server are generally remote from each other, and generally interact with each other through a communication network. The relationship between the client and the server is generated by virtue of computer programs that run on corresponding computers and have a client-server relationship with each other. The server may be a cloud server, a server in a distributed system, or a server that incorporates blockchain.

It should be understood that the various forms of processes shown above may be used to reorder, add, or delete steps. For example, the steps disclosed in the present disclosure may be executed in parallel, sequentially, or in different orders, as long as the desired results of the technical solutions mentioned in the present disclosure can be implemented. This is not limited herein.

The above specific embodiments do not constitute any limitation to the scope of protection of the present disclosure. It should be understood by those skilled in the art that various modifications, combinations, subcombinations, and replacements may be made according to the design requirements and other factors. Any modification, equivalent replacement, improvement, and the like made within the spirit and principle of the present disclosure should be encompassed within the scope of protection of the present disclosure.

## Claims

1. A method for accessing a network function virtualization controller by a network element, the method comprising:
creating (201) at least one service unit in a region to which a network element belongs;
associating (202) the at least one service unit with a system virtual private cloud (VPC) corresponding to the network element;
associating (203) at least one availability zone comprised in the service unit with at least one device pool and at least one subnet respectively, wherein the device pool is formed by aggregating at least one virtual network element device;
associating (204) the at least one device pool with the at least one subnet based on an IP corresponding relationship; and
accessing (205), by the at least one service unit, a network function virtualization controller deployed in the region to which the network element belongs.

2. The method according to claim 1, further comprising:
determining (306) a task flow of the network element, when a management operation of the virtual network element device is performed on the service unit; and
running (307) tasks based on an order of the tasks in a task list in the task flow.

3. The method according to claim 2, wherein the determining a task flow of the network element comprises:
calling, in response to finding a service type associated with the service unit from the network function virtualization controller, a task flow under the service type associated with the service unit.

4. The method according to claim 3, wherein the determining a task flow of the network element further comprises:
calling, in response to not finding the service type associated with the service unit from the network function virtualization controller, a task flow under a service type inherited by the service unit.

5. The method according to claim 2 to 4, wherein a task is a referenceable method entity existing independently of the task flow, and a given referenceable method entity is capable of being referenced by different task flows in different ways.

6. An apparatus for accessing a network function virtualization controller by a network element, the apparatus comprising:
a creating module (701) configured to create at least one service unit in a region to which a network element belongs;
a first associating module (702) configured to associate the at least one service unit with a system virtual private cloud (VPC) corresponding to the network element;
a second associating module (703) configured to associate at least one availability zone comprised in the service unit with at least one device pool and at least one subnet respectively, wherein the device pool is formed by aggregating at least one virtual network element device;
a third associating module (704) configured to associate the at least one device pool with the at least one subnet based on an IP corresponding relationship; and
an accessing module (705) configured to access, by the at least one service unit, a network function virtualization controller deployed in the region to which the network element belongs.

7. The apparatus according to claim 6, wherein the apparatus further comprise:
a determining module configured to determine a task flow of the network element, when a management operation of the virtual network element device is performed on the service unit; and
a running module configured to run tasks based on an order of the tasks in a task list in the task flow.

8. The apparatus according to claim 7, wherein the determining module is further configured to:
call, in response to finding a service type associated with the service unit from the network function virtualization controller, a task flow under the service type associated with the service unit.

9. The apparatus according to claim 8, wherein the determining module is further configured to:
call, in response to not finding the service type associated with the service unit from the network function virtualization controller, a task flow under a service type inherited by the service unit.

10. The apparatus according to any one of claims 7 to 9, wherein a task is a referenceable method entity existing independently of the task flow, and a given referenceable method entity is capable of being referenced by different task flows in different ways.

11. A non-transitory computer readable storage medium, storing computer instructions, wherein the computer instructions, when executed by a computer, causes the computer to perform the method according to any one of claims 1 to 5.

12. A computer program product comprising a computer program which, when executed by a processor, performs the method according to any one of claims 1 to 5.
